# EUROPÄISCHE PATENTSCHRIFT

(11) **EP 1 052 320 B1**
(45) Veröffentlichungstag und Bekanntmachung des Hinweises auf die Patenterteilung: **14.05.2003**
(21) Anmeldenummer: 00250094.0
(22) Anmeldetag: 17.03.2000
(51) Int. Cl.: D04C 3/40

(54) **Strangführungshebel für Flechtmaschinen**
Strand guide lever for braiding machines
Levier de guidage de brin pour métier à tresser

(30) Priorität: 01.04.1999 DE 19916416; 16.03.2000 DE 10014433
(43) Veröffentlichungstag der Anmeldung: 15.11.2000
(73) Patentinhaber: Schnellflechter Berlin GmbH, 10315 Berlin (DE)
(72) Erfinder: Lache, Jürgen, Dipl.-Ing., 13516 Berlin (DE); Prockat, Dieter, Dr.-Ing., 12487 Berlin (DE)
(74) Vertreter: Hannig, Wolf-Dieter, Dipl.-Ing.

(56) Entgegenhaltungen:
- EP-A- 0 412 668
- US-A- 4 034 642

## Beschreibung

Die Erfindung betrifft einen Strangführungshebel für Flechtmaschinen, insbesondere Schnellflechtmaschinen mit jeweils einer um die Maschinenachse kreisenden Gruppe äußerer und innerer Lieferspulen in kreisförmiger Anordnung, wobei der Strangführungshebel einerends am Hebelständer dreh- und schwingbar in einem sich in Längsrichtung **(D)** erstreckenden Hebelkörper **(5)** angeordneten Lagerauge **(3)** gelagert, mit diesem und den äußeren Lieferspulen um die Maschinenachse kreist und anderenends eine Aufnahme für eine Rolle **(8)** zur Fadenführung aufweist, wobei im Hebelköper **(5)** ein Führungsstift **(9)** mit aufgepaßtem Gleitstein **(10)** vorgesehen ist.

Es sind Flechtmaschinen mit Strangführungen auf der Basis eines Kurvengetriebes bekannt, die einen großen, den äußeren Spulenkreis einschließenden Kurvenring aufweisen, dessen Führungsbahn aus mehreren sinusförmigen Wellen besteht (siehe Prospekt Drahtflechtanlage UNIDRA 24S, Typ 2410 S/4, Dratex 2450, 1998). In die Kurvenführungsbahnen greifen mehrere Kurvenabtastkörper (Schiffchen, Rollen) ein, die das Bewegungsgesetz auf den jeweiligen verschwenkbaren

Strangführungshebel übertragen. Die verschwenkbaren Strangführungshebel besitzen Leitrollen zur Führung des Strangmaterials und sind in Hebelständern gelagert, die an der Tragscheibe um die zentrale Hohlwelle rotieren.
Vom benachbart angeordneten feststehenden Kurvenkörper werden die mitumlaufenden Strangführungshebel in Schwingungen versetzt. Dabei wird das Strangmaterial von den äußeren Lieferspulen über die Leitrollen der Strangführungshebel dem Flechtpunkt der Maschine zugeführt.
Die in diesen Flechtmaschinen eingesetzten bekannten Strangführungshebel weisen einige Nachteile auf. Erstens besitzen die meist aus Aluminiumlegierungen bestehenden Hebel eine relativ große Masse, die zu einer hohen maschinendynamischen Beanspruchung des Kurvengetriebes und zu einem hohen Verschleiß an den Kurvenabtastkörpern und an der Führungsbahn führen. Zweitens reduziert eine "Masseoptimierung" die Lebensdauer derartiger Strangführungshebel und zugleich wird die Leistungsfähigkeit der Flechtmaschine eingeschränkt. Höhere Arbeitsgeschwindigkeiten sind nicht mehr erzielbar.

Aus der DE 27 43 893 C ist eine Flechtmaschine mit einer Strangführung bekannt, die in einem Drehtisch in Nähe der Maschinenlängsachse mehrere Wellen parallel konzentrisch gelagert hat, wobei ein Ende der Wellen mit einem Planetenzahnrad und das andere Ende mit einer Kurbel versehen ist. An der Peripherie des Drehtisches ist eine Lagerscheibe angeordnet, die Lagerstellen zur Aufnahme des Strangführungshebels und eines Schwenkhebels besitzt.
Zur Realisierung der Schwenkbewegung des Strangführungshebels wird der Kurbelhub über eine Koppelstange auf Schwinkhebel und Strangführungshebel ubertragen.

Nachteilig an diesem bekannten Strangführungshebel ist, dass er auf Grund seiner massiven Stahlausführung hohe Massenkräfte beim Schwingen auf die Drehgelenke ausübt, was einen schnelleren Verschleiß bewirkt und außerdem starke Vibrationen in der Strangführung verursacht, insbesondere mit zunehmenden Spiel in den Drehgelenken.
Andere bekannte Schwenkhebel (siehe EP 0 412 668A1) versuchen diese Nachteile dadurch zu beseitigen, in dem zumindest ein Armteil aus Draht gebogen ist.
Dieser bekannte Schwenkhebel besitzt eine geringe Verwindungssteifigkeit und neigt zu hohen Vibrationen in der Strangführung.

Bei diesem Stand der Technik liegt der Erfindung die Aufgabe zugrunde, die Masse des Strangführungshebels bei gleichzeitiger Beibehaltung der Verwindungssteifigkeit und Stabilität unter sicherer Aufnahme der auftretenden Maschinenbelastungen signifikant zu reduzieren und die Arbeitsgeschwindigkeit trotzdem zu erhöhen.

Dies wird mit dem Strangführungshebel der eingangs genannten Art erfindungsgemäß dadurch gelöst, daß der Strangführungshebel als ein geschlossener Hohlkörper oder als ein Kompaktkörper ausgebildet ist, die aus ein- bzw. mehrschichtigen Schale geformt sind.
In weiterer Ausgestaltung der Erfindung besteht die Schale des Hohlkörpers aus einem mit Fasern, vorzugsweise Kohlenstoff-, Glas-, Bor-, Metall- oder Whiskerfasern, verstärkten Kunstsoff-Laminat, wobei die Fasern vorzugsweise als Gewebe vorliegen.

Die Schale kann aber auch, ohne die Erfindung zu verlassen, aus einem dünnen, hochfesten Metallguß bestehen.

In den Kunststoff-Hohlkörper ist zur Herbeiführung einer hohen Formhaltigkeit ein Kern aus Schaumkunststoff eingesetzt, vorzugsweise ein Kern aus Polyurethanschaumstoff. Der Schaumstoff trägt im wesentlichen zur Formbeständigkeit der Kunststoff-Laminatschale bei und weniger zur Verankerung der Einsätze wie das Lagerauge, der Führungsstift für den Gleitstein oder die Inserts zur Aufnahme von Führungsrollen usw.

Eine weitere bevorzugte Ausführungform der Erfindung sieht vor, dass der Kompaktkörper aus einer Schale mit mindestens zwei Schichten aus einem mit Fasern verstärktem Laminat und einer Stabilitätsschicht besteht. Geeignete Fasern sind solche aus Kohlenstoff, Glas, Metall oder Metallwhiskern. Strangführungshebel aus derartigen Kompaktkörpern sind besonders für kleine Abmessungen geeignet.

Eine besonders vorteilhafte Verwindungssteifheit wird dadurch erreicht, daß der Hohlkörper bzw. der Kopaktkörper sich vom Lagerauge bis zur Aufnahme für die Rolle erstreckt und unsymmetrisch zu seiner Längsachse in Längsrichtung verläuft.

Dabei setzt sich nach einer bevorzugten und vorteilhaften Ausführungsform der Erfindung die hohle Laminatschale bzw. die Laminatschicht aus mit Harz imprägnierten, um den Kern angeordneten, durch das Harz miteinander verbundenen Kohlenstoff-Fasergewebelagen zusammen, und zwar aus einer 0°/90° zur größten Längsausdehnung des Hebels verlegten ersten Gewebelage mit 160 bis 250 g/m2 Flächengewicht, einem 45°/-45° zur Längsausdehnung angeordneten zweiten Gewebelage mit einem Flächengewicht zwischen 160 bis 250 g/m², mehreren zur Anbindung des Lagerauges entlang der Kanten angeordnete Kohlenstoff-Faser-Rovinggelege mit einem Gewicht von tex 1600 bis 1700, einem in Längsrichtung angeordneten unidirektionalen Kohlenstoff-Faserband mit einem Gewicht von 300 g/m², und einem wiederum um 0°/90° zur Längsausdehnung verlegten dritten Gewebelage mit einem Flächengewicht von 160 bis 250 g/m², wobei der Harzmassenanteil zwischen 282 und 437 g/m² beträgt.

In einer weiteren bevorzugten Ausgestaltung der Erfindung ist das zur Imprägnierung der Kohlenstoff-Fasergewebe verwendete Harz ein wärmeaushärtendes Harz, vorzugsweise Epoxidharz, Polyimidharz, Phenolharz oder Polyesterharz.

In einer weiteren Ausgestaltung der Erfindung sind Inserts für die Befestigung am Hebelständer, der Führungsrollen, der Gleitsteinhalterung etc. zwischen den Gewebelagen eingelegt. Diese können vorteilhafterweise aus Metall, vorzugsweise aus Aluminium, gefertigt sein. Natürlich können aber auch Inserts aus Kunststoffen eingelegt werden, ohne die Erfindung zu verlassen.

Mit einem solchen Aufbau der erfindungsgemäßen Faser-Laminatschale bzw. Laminatschicht wird eine effektive Wandstärke zwischen 0,6 und 1,3 mm problemlos erreicht.

Der Vorteil des erfindungsgemäßen Strangführungshebels besteht in der nachhaltigen Verringerung der Masse des Hebels ohne auf eine hohe Verwindungssteifigkeit und Stabilität verzichten zu müssen. Dies führt zur Vereinfachung der Konstruktion bei gleichzeitiger Gewichtsersparnis.

Mit der Erfindung wird es möglich, die Drehzahl der Maschine zu erhöhen und somit die Frequenz der Fadenhebelbewegung zu steigern.

Durch alle diese Merkmale wird erreicht, daß die erfindungsgemäße Lösung den komplexen Anforderungen einer verschleißarmen und sicheren Fahrweise der Flechtmaschine bei hoher Lebensdauer der Strangführungshebel besser gerecht wird.

Weitere Vorteile, Einzelheiten und Merkmale ergeben sich aus der nachfolgenden Beschreibung unter Bezugnahme auf die beigefügten Zeichnungen.

Es zeigen:
- Fig. 1: eine Draufsicht eines herkömmlichen metallischen Strangführungshebels,
- Fig. 2: eine Seitenansicht des erfindungsgemäßen Strangführungshebels als Hohlkörper,
- Fig. 3: eine Draufsicht des erfindungsgemäßen Strangführungshebels als Hohlkörper,
- Fig. 4: einen Schnitt entlang der Linie A-A der Fig. 3,
- Fig. 5: eine Draufsicht des erfindungsgemäßen Strangführungshebels als Kompaktkörper,

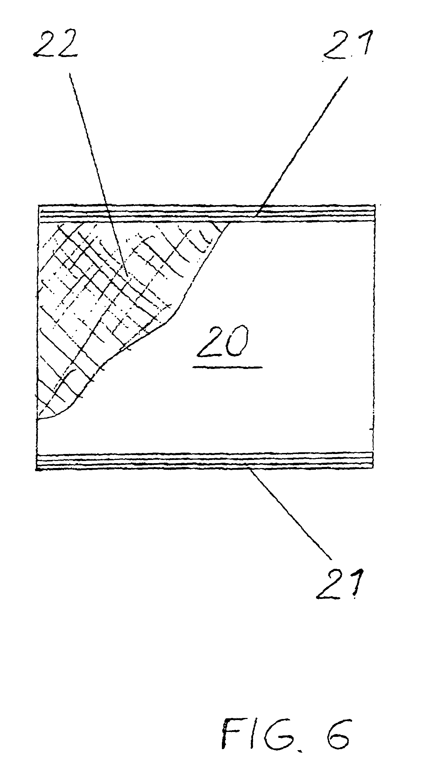

- Fig. 6: einen Schnitt entlang der Linie E-E der Fig. 5 und
- Fig. 7: den prinzipiellen Aufbau der Laminatschale des erfindungsgemäßen Strangführungshebels.

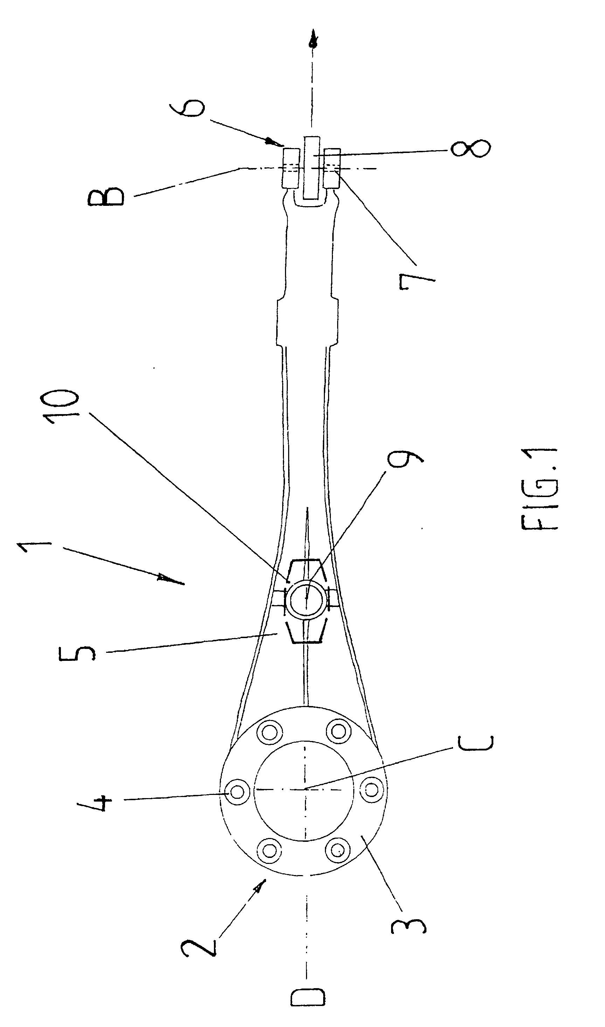

Fig. 1 zeigt eine Seitenansicht eines Beispiels eines herkömmlichen Strangführungshebels aus einem Alumimium-Titanguß. Der Strangführungshebel hat eine langgestreckte profilartig ausgebildete Form, wobei das eine verhältnismäßig flach ausgebildete Ende **2** des Hebels **1** ein Lagerauge **3** bildet. Das Lagerauge **3** ist schwenk- und drehbar am Hebelständer gelagert. Das Lagerauge **3** besitzt kreisförmig um die Öffnung des Auges herum gelegene Bohrungen **4** zum Befestigen mit dem nicht dargestellten Hebelständer. Vom Lagerauge **3** erstreckt sich der Hebelkörper **5** in Längsrichtung D zum anderen Ende **6**, das eine Bohrung **7** für die Aufnahme einer Drehachse **B** für eine Strangführungsrolle **8** besitzt. Die Drehachse **B** der Führungsrolle **8** liegt senkrecht zum Drehpunkt **C** des Lagerauges **3**. Im Hebelkörper **5** des Hebels **1** ist nahe des Lagerauges ein Stift **9** mit aufgesetztem Gleitstein **10** festgelegt.

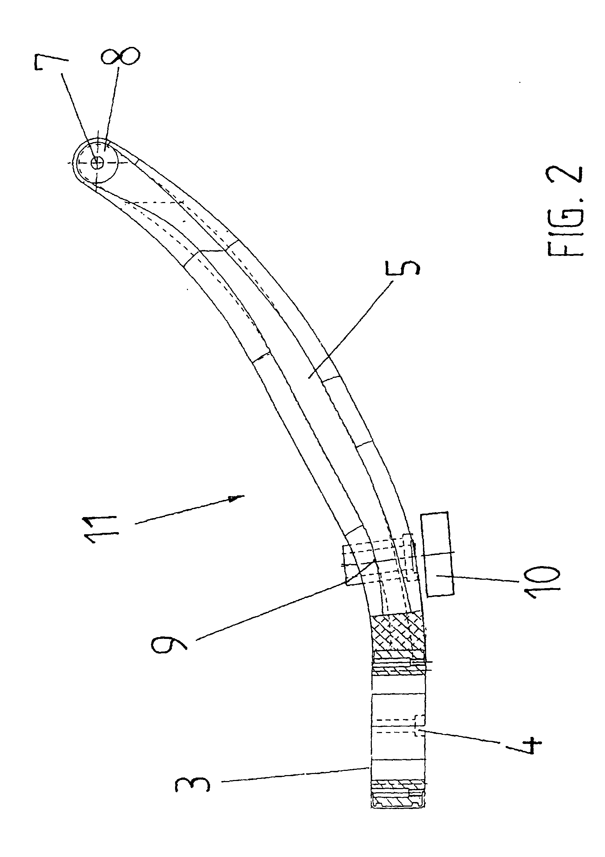

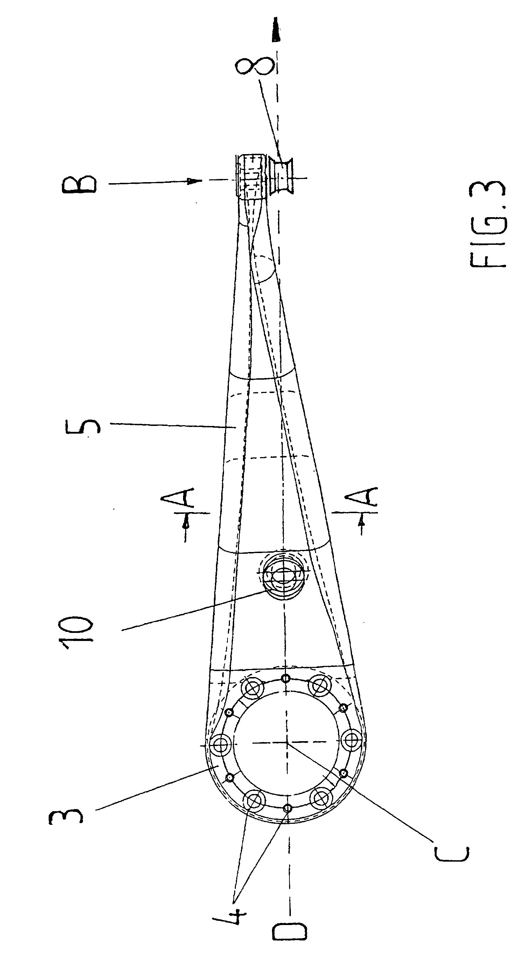

Fig. 2 und 3 stellt den erfindungsgemäßen Strangführungshebel dar, der wie in Fig. 1 gezeigt, einerends das Lagerauge **3** und anderenends die Führungsrolle **8** aufweist.
Der erfindungsgemäße Strangführungshebel **11** hat eine leicht gebogene Form und besteht aus einem Hohlkörper **12**, der von einer Kunststoff-Faser-Laminatschale **13** gebildet ist. Der Hohlkörper **12** erstreckt sich vom Ende **2** des Hebelkorpers **5** bis zur Aufnahme für die Rolle **8** und verläuft in Längsrichtung **D** gesehen aus der Flucht der Längsachse **D** des Körpers heraus. Dies verbessert die Verwindungssteifheit.

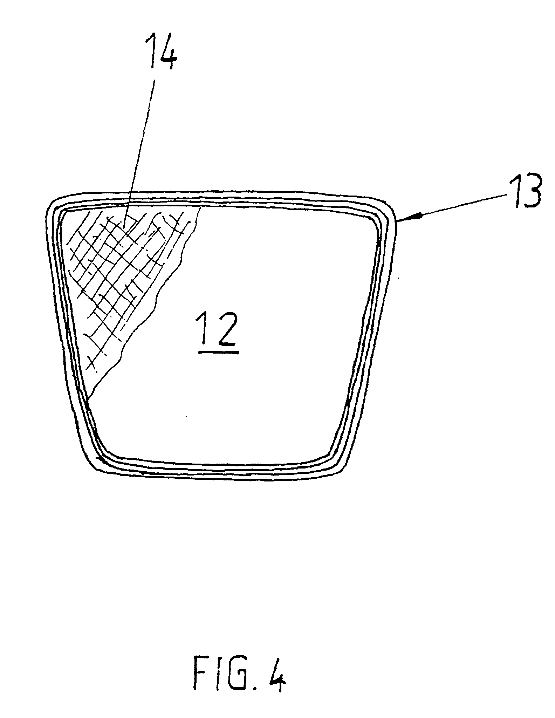

Im Hohlkörper **12** befindet sich ein Kern **14** aus Polyurethanschaum mit einem Flächengewicht von 0,05 g/cm², 5 der die Einhaltung der Formgenauigkeit beim Herstellen und zugleich Stabilitätsfunktion übernimmt (siehe Fig. 4).

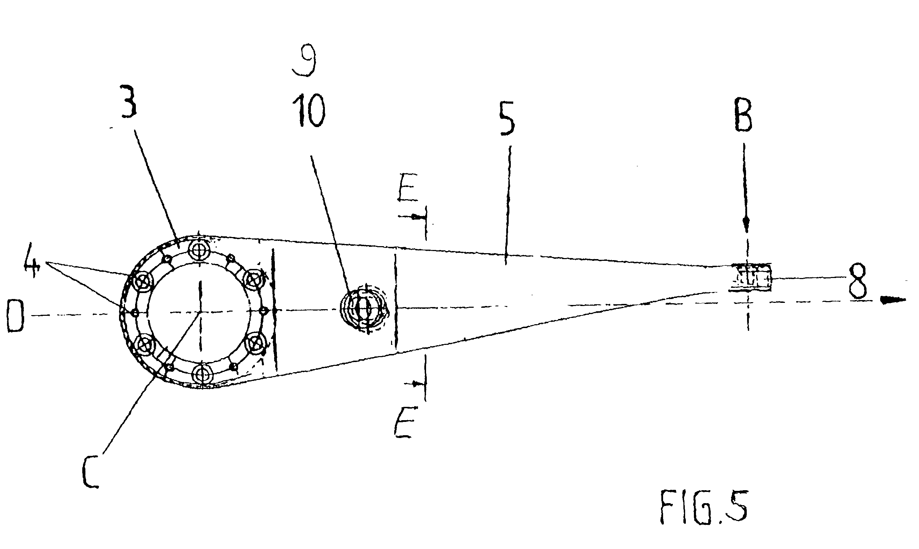

In Fig. 5 ist der Strangführungshebel **11** als Kompaktkörper **20** gezeigt. Der Kompaktkörper **20** besteht aus einer Schale **13**, die sich aus einer Stabilisierungsschicht **22** und zwei Kohlenstoff-Faser-Laminatschichten **21** zusammensetzt.

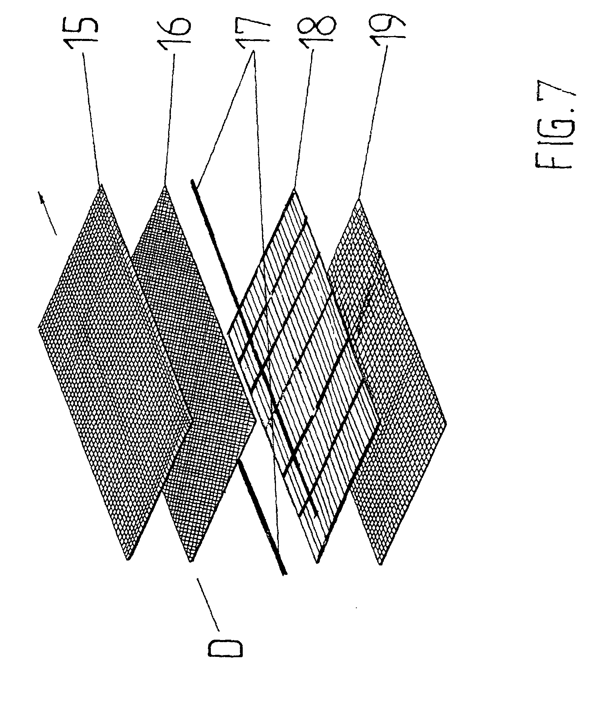

Die Faser-Laminatschale **13** ist, wie in Fig. 7 gezeigt, ein Verbund aus einer vom Kern **14** aus betrachtet ersten Kohlenstoff-Fasergewebelage **15** mit einem Flächengewichte von 200 g/m², die senkrecht zur Längsrichtung **D** des Hebels verlegt ist, einem diagonal zur Längsrichtung **D** des Hebels **11** verlegten zweiten Kohlenstoff-Fasergewebelage **16** mit einem Flächengewicht von 200 g/m², mehreren Kohlenstoff-Faser-Rovings **17** mit einem Flächengewicht von 1600 tex für die Anbindung des Lagerauges **3** im Hebelkörper, einem in Längsrichtung **D** des Hebels **11** angeordneten unidirektionalen Kohlenstoff-Faserband **18** mit einem Flächengewicht von 300 g/m² und einer Breite von 25 mm, einer senkrecht zur Längsrichtung **D** des Hebels **11** verlegten dritten Kohlenstoff-Fasergewebelage **19** mit einem Flächengewicht von 200 g/m2.
Alle Lagen **15, 16, 17, 18** und **19** sind mit einem zuvor zugestellten Expoxidharz, beispielsweise Araldit der Firma Ciba Geigy AG, imprägniert und werden durch das Harz miteinander verbunden.
Um das Lagerauge **3,** den Stift **9** und die Drehachse **B** der Strangführungsrolle **8** im Hebelkorper zu befestigen, sind metallische Inserts, beispielsweise aus Aluminium, in die Lagen **15, 16, 17, 18** und **19** eingebettet.

Ein derartiger Strangführungshebel **11** hat ein drastisch geringeres Gewicht und erreicht ein deutlich abgesenktes Trägheitsgewicht θ gegenüber einem metallischen Hebel, so daß die Maschinenleistung bei gleicher Antriebskraft um etwa 70% zunimmt.

### Aufstellung der verwendeten Bezugszeichen

- 1: Strangführungshebel alt
- 2: Ende von 1 bzw. 11
- 3: Lagerauge
- 4: Bohrung für Befestigung am Hebelständer
- 5: Hebelkörper
- 6: Ende von 1
- 7: Bohrung
- 8: Strangführungsrolle
- 9: Stift
- 10: Gleitstein
- 11: Strangführungshebel neu
- 12: Hohlkörper
- 13: Kunststoff-Faser-Laminatschale
- 14: Kern
- 15: erste Kohlenstoff-Fasergewebelage
- 16: zweite Kohlenstoff-Fasergewebelage
- 17: Kohlenstoff-Faser-Roving
- 18: Kohlenstoff-Faserband
- 19: dritte Kohlenstoff-Fasergewebelage
- 20: Kompaktkörper
- 21: Kohlenstoff-Faser-Laminatschicht
- 22: Stabilisierungsschicht
- B: Drehachse für 8
- C: Drehpunkt für 3
- D: Längsrichtung bzw. Längsachse des Hebels

## Patentansprüche

1. Strangführungshebel für Flechtmaschinen, insbesondere Schnellflechtmaschinen mit jeweils einer um die Maschinenachse kreisenden Gruppe äußerer und innerer Lieferspulen in kreisförmiger Anordnung, wobei der Strangführungshebel einerends am Hebelständer dreh- und schwingbar in einem sich in Längsrichtung **(D)** erstreckenden Hebelkörper **(5)** angeordneten Lagerauge **(3)** gelagert ist, mit diesem und den äußeren Lieferspulen um die Maschinenachse kreist und anderenends eine Aufnahme für eine Rolle **(8)** zur Fadenführung aufweist, wobei im Hebelköper **(5)** ein Führungsstift **(9)** mit aufgepaßtem Gleitstein **(10)** vorgesehen ist,
**dadurch gekennzeichnet, dass** der Strangführungshebel **(11)** als ein geschlossener Hohlkörper **(12)** oder als ein Kompaktkörper **(20)** ausgebildet ist, die aus einer ein- bzw. mehrschichtigen Schale **(13)** geformt sind.

2. Strangführungshebel nach Anspruch 1, **dadurch gekennzeichnet, dass** die Schale **(13)** aus einem mit Fasern, vorzugsweise Kohlenstoff-, Glas-, Metall- oder Whiskerfasern, verstärktem Kunststoff-Laminat besteht.

3. Strangführungshebel nach Anspruch 1 und 2, **dadurch gekennzeichnet, dass** die Fasern als Gewebe vorliegen.

4. Strangführungshebel nach Anspruch 2, **dadurch gekennzeichnet, dass** die Schale (13) aus Metallguß besteht.

5. Strangführungshebel nach Anspruch 1 und 2, **dadurch gekennzeichnet, dass** im Hohlkörper **(12)** ein Kern **(14)** angeordnet ist.

6. Strangführungshebel nach Anspruch 1 bis 5, **dadurch gekennzeichnet, dass** der Kern **(14)** aus einem Schaumstoff, vorzugsweise Polyurethan-Schaumstoff, besteht.

7. Strangführungshebel nach Anspruch 1, **dadurch gekennzeichnet, dass** der Kompaktkörper **(20)** aus einer Schale **(13)** mit mindestens zwei Schichten **(21)** aus einem mit Fasern, vorzugsweise Kohlenstoff-, Glas-, Metall- oder Whiskerfasern verstärktem Laminat, und einer Stabilisierungsschicht **(22)** besteht.

8. Strangführungshebel nach Anspruch 1 und 7, **dadurch gekennzeichnet, dass** die Stabilisierungsschicht **(22)** aus Schaumstoff, vorzugsweise Polyurethan-Schaumstoff, besteht.

9. Strangführungshebel nach Anspruch 1,
**dadurch gekennzeichnet, daß** der Hohlkörper **(12)** bzw. der Kompaktkörper **(20)** sich vom Lagerauge **(3)** bis zur Aufnahme für die Rolle **(8)** erstreckt und unsymmetrisch zu seiner Längsachse in Längsrichtung **(D)** verläuft.

10. Strangführungshebel nach einem oder mehreren der vorherigen Ansprüche,
**dadurch gekennzeichnet, daß** sich die Schale **(13)** bzw. Laminatschichten **(21)** aus mit Harz imprägnierten, um den Kern **(14)** bzw. der Stabilisierungsschicht **(22)** angeordneten, durch das Harz miteinander verbundenen Kohlenstoff-Fasergewebelagen **(15,16,17,18,19),** und zwar aus einer 0°/90° zur größten Längsausdehnung des Hebels verlegten ersten Gewebelage **(15)** mit 160 bis 250 g/m² Flächengewicht, einem 45°/45° zur Längsausdehnung angeordneten zweiten Gewebelage **(16)** mit einem Flächengewicht zwischen 160 bis 250 g/m², mehreren zur Anbindung des Lagerauges **(3)** entlang der Kanten angeordnete Kohlenstoff-Faser-Rovinggelege **(17)** mit einem Gewicht von tex 1600 bis 1700einem in Längsrichtung **(D)** angeordneten unidirektionalen Kohlenstoff-Faserband **(18)** mit einem Gewicht von 300 g/m², und einem wiederum um 0°/90° zur Längsausdehnung **(D)** verlegten dritten Gewebelage **(19)** mit einem Flächengewicht von 160 bis 250 g/m² zusammensetzt, wobei der Harzmassenanteil zwischen 282 und 437 g/m² beträgt.

11. Strangführungshebel nach einem oder mehreren der vorherigen Ansprüche,
**dadurch gekennzeichnet, daß** das zur Imprägnierung der Kohlenstoff-Fasergewebelagen verwendete Harz ein Epoxidharz, Polyimidharz, Phenolharz oder Polyesterharz ist.

12. Strangführungshebel nach einem oder mehreren der vorherigen Ansprüche,
**dadurch gekennzeichnet, daß** Inserts für die Befestigung am Hebelstander, der Führungsrollen, der Gleitsteinhalterung zwischen den Gewebelagen **(15,16,17,18,19)** eingelegt sind.

13. Strangführungshebel nach Anspruch 12,
**dadurch gekennzeichnet, daß** die Inserts aus Metall, vorzugsweise Aluminiumlegierungen, oder Kunststoff bestehen.

14. Strangführungshebel nach einem oder mehreren der vorherigen Ansprüche,
**dadurch gekennzeichnet, daß** die Dicke der Schale **(13)** bzw. der Laminatschichten **(21)** zwischen 0,6 bis 1,3 mm beträgt.

## Claims

1. Strand-guide arm for braiding machines, especially high speed braiding machines having in a circular arrangement an outer and inner group of delivery spools rotating about the machine axis whereby the inner end of the strand-guide arm is arranged rotable and pivotable at a lever stand in a pivot eye (3) which is placed in longitudinal direction (D) of the arm body (5), said pivot eye and outer delivery spools are circulated around the machine axis, and the outer end of said strand-guide arm shows a socket for a roller (8) to guide the thread whereby a former pin (9) is provided with a fitted slide ring (10)in the arm body (5), **characterized in that** the strand-guide arm (11) is formed as a continuos hollow body (12) or compact body (20) which are formed by a single shell respectively multiple shells (13).

2. Strand-guide arm according to claim 1 **characterized in that** the shell (13) consist of fibres reinforced plastic laminate which fibres are made from carbon, glass, metal or whiskers.

3. Strand-guide arm according to claim 1 and 2 **characterized in that** the fibres include woven material.

4. Strand-guide arm according to claim 2 **characterized in that** the shell (13) consist of cast metal.

5. Strand-guide arm according to claim 1 and 2 **characterized in that** a core (14) is arranged in the hollow body (12).

6. Strand-guide arm according to claim 1 to 5 **characterized in that** the core (14) is made from a foamed plastic preferably polyurethane foam.

7. Strand-guide arm according to claim 1 **characterized in that** the compact body (20) consist of a stabilizing layer (22) and a shell (13) with at least two layers (21) made from fibres reinforced plastic laminate which fibres include from carbon, glass, metal or whiskers.

8. Strand-guide arm according to claim 1 and 7 **characterized in that** the stabilizing layer (22) is made from foam plastic preferably polyurethane foam.

9. Strand-guide arm according to claim 1 **characterized in that** the hollow body (12) respectively compact body (20) extends of the pivot eye (3) up to the roller (8) and is asymmetrically to his longitudinal axis in longitudinal direction (D).

10. Strand-guide arm according to one or several of the previously claims **characterized in that** the shell (13) respectively laminate layers (21) include woven materials (15,16,17,18,19) with carbon fibres which are impregnated with resin and arranged around the core (14) respectively stabilizing layer (22) connected together by the resin, namely a first textile reinforcement having a surface density of between 160 g/m² and 250 g/m² and extending parallel and perpendicular (0°/90°) to the longitudinal direction, a second textile reinforcement (16) with carbon fibres extending at 45°/45° to the longitudinal axis and having a density of between 160 g/m² and 250 g/m², a plurality of carbon-fibre reinforcement rovings (17) with a weight of tex 1600 to 1700, a third textile reinforcement with carbon fibres extending parallel and perpendicular (90°/90°) to the longitudinal direction and having a surface density of between 160 g/m² and 250 g/m², whereby the quota of mass of resin is 282 g/m² and 437 g/m².

11. Strand-guide arm according to one or several previously claims **characterized in that** the resin for the impregnation of the woven material with carbon fibres is an epoxy, a polyamide, a phenol, or a polyester.

12. Strand-guide arm according to one or several previously claims **characterized in that** inserts are placed between the woven materials (15,16,17,18,19) for fixing at the lever stand, the guiding roller and slide ring holder.

13. Strand-guide arm according to claim 12 **characterized in that** the inserts are made from metals preferably aluminium alloys, or plastic.

14. Strand-guide arm according to one or several of previously claims **characterized in that** the shell (13) respectively laminate layers (21) have a thickness between 0,6 mm and 1,3 mm.

## Revendications

1. Levier de guidage de brin pour tresseuses, en particulier tresseuses rapides avec respectivement un groupe de bobines extérieures et intérieures d'alimentation en disposition circulaire, qui tourne autour de l'axe de la machine, à une extrémité le levier de guidage de brin étant logé sur le support de levier de manière rotative et oscillante dans un oeil de logement (3) disposé dans le corps de levier (5) s'étendant dans la direction longitudinale (D), et tournant avec celui-ci et avec les bobines extérieures d'alimentation autour de l'axe de la machine et présentant à l'autre extrémité un logement pour un rouleau (8) destiné au guidage du fil, dans le corps de levier (5) étant prévu une goupille de guidage (9) avec un glisseur (10) ajusté, **caractérisé par le fait que** le levier de guidage de brin (11) est réalisé comme un corps creux fermé (12) ou comme un corps compact (20) qui sont formés d'une enveloppe (13) à une ou bien à plusieurs couche(s).

2. Levier de guidage de brin selon la revendication 1, **caractérisé par le fait que** l'enveloppe (13) se compose d'un aggloméré laminé en matière plastique renforcé par fibres, de préférence par fibres de carbone, de verre, métalliques ou whisker.

3. Levier de guidage de brin selon la revendication 1 et 2, **caractérisé par le fait que** les fibres sont présentes en tant que tissu.

4. Levier de guidage de brin selon la revendication 2, **caractérisé par le fait que** l'enveloppe (13) se compose de métal coulé.

5. Levier de guidage de brin selon la revendication 1 et 2, **caractérisé par le fait qu'**un noyau (14) est disposé dans le corps creux (12).

6. Levier de guidage de brin selon la revendication 1 à 5, **caractérisé par le fait que** le noyau (14) se compose d'une mousse, de préférence de mousse de polyuréthane.

7. Levier de guidage de brin selon la revendication 1, **caractérisé par le fait que** le corps compact (20) se compose d'une enveloppe (13) avec au moins deux couches (21) en un aggloméré laminé renforcé par fibres, de préférence par fibres de carbone, de verre, métalliques ou whisker, et avec une couche de stabilisation (22).

8. Levier de guidage de brin selon la revendication 1 et 7, **caractérisé par le fait que** la couche de stabilisation (22) se compose de mousse, de préférence de mousse de polyuréthane.

9. Levier de guidage de brin selon la revendication 1, **caractérisé par le fait que** le corps creux (12) ou bien le corps compact (20) s'étend de l'oeil de logement (3) jusqu'au logement pour le rouleau (8) et s'étend de façon asymétrique à son axe longitudinal dans la direction longitudinale (D).

10. Levier de guidage de brin selon l'une ou plusieurs des revendications précédentes, **caractérisé par le fait que** l'enveloppe (13) ou bien les couches en aggloméré laminé (21) se compose(nt) de couches de tissu de fibres de carbone (15, 16, 17, 18, 19), qui sont imprégnées de résine, disposées autour du noyau (14) ou bien de la couche de stabilisation (22) et reliées entre elles par la résine, à savoir d'une première couche de tissu (15) placée de 0°/90° à l'étendue longitudinale la plus grande du levier, avec un grammage de 160 à 250 g/m², d'une deuxième couche de tissu (16) disposée de 45°/45° à l'étendue longitudinale, avec un grammage compris entre 160 et 250 g/m², de plusieurs rovings de fibres de carbone (17) disposés le long des arêtes pour attacher l'oeil de logement (3) et ayant un poids de tex compris entre 1600 et 1700, d'une bande de fibres de carbone (18) unidirectionnelle disposée dans la direction longitudinale (D) et ayant un poids de 300 g/m², et d'une troisième couche de tissu (19) placée elle aussi de 0°/90° à l'étendue longitudinale (D), avec un grammage compris entre 160 et 250 g/m², la part de la masse de résine étant comprise entre 282 et 437 g/m².

11. Levier de guidage de brin selon l'une ou plusieurs des revendications précédentes, **caractérisé par le fait que** la résine utilisée pour l'imprégnation des couches de tissu de fibres de carbone est une résine époxyde, une résine de polyimide, une résine phénolique ou une résine polyester.

12. Levier de guidage de brin selon l'une ou plusieurs des revendications précédentes, **caractérisé par le fait que** des inserts pour la fixation sur le support de levier, pour la fixation des rouleaux de guidage, pour la fixation du support de glisseur sont insérés entre les couches de tissu (15, 16, 17, 18, 19).

13. Levier de guidage de brin selon la revendication 12, **caractérisé par le fait que** les inserts se composent de métal, de préférence d'alliages d'aluminium, ou de matière plastique.

14. Levier de guidage de brin selon l'une ou plusieurs des revendications précédentes, **caractérisé par le fait que** l'épaisseur de l'enveloppe (13) ou bien des couches en aggloméré laminé (21) est comprise entre 0,6 et 1,3 mm.
